# EUROPÄISCHE PATENTANMELDUNG

(11) **EP 4 518 256 A1**
(43) Veröffentlichungstag der Anmeldung: **05.03.2025**
(21) Anmeldenummer: 24196370.1
(22) Anmeldetag: 26.08.2024
(51) Int. Cl.: H04L 12/10, H04L 12/40, G06F 1/26, H04B 3/44

(54) **DEVICE ZUM BETREIBEN IN EINEM NETZWERK, AUTOMATISIERUNGSSYSTEM UND VERFAHREN ZUM BETRIEB DES AUTOMATISIERUNGSSYSTEMS**

(30) Priorität: 29.08.2023 DE 102023123139
(71) Anmelder: Turck Holding GmbH, 58553 Halver (DE)
(72) Erfinder: Becker, Friedrich, 32657 Lemgo (DE)
(74) Vertreter: DTS Patent- und Rechtsanwälte PartmbB

(57) **Zusammenfassung**

Die vorliegende Erfindung betrifft ein Device (100) zum Betrieb in einem Netzwerk (400), wobei das Device (100) einen Sensor, einen Aktor, eine Sende- und/oder Empfangseinheit oder ein sonstiges elektronisches Gerät umfasst, wobei das Netzwerk als ein Zweidrahtnetzwerk mit *Power over Dataline,* PoDL, ausgebildet ist, umfassend mindestens ein erstes, eingangsseitiges Interface (102), mindestens ein zweites, ausgangsseitiges Interface (104), eine Versorgungseinheit (110), eine Funktionseinheit (180) und eine Daten- und Elektronische Baueinheit (190), wobei die Daten- und Elektronische Baueinheit (190) das Folgende umfasst:
eine Prozessoreinheit (170), ein eingangsseitiges PHY (172), ein ausgangsseitiges PHY (174), eine eingangsseitige Kopplungseinheit (176) und eine ausgangsseitige Kopplungseinheit (178),
- wobei das ersten Interface (102) mit dem zweiten Interface (104) über eine zweiadrige Durchgangsleitung (120) verbunden ist, welche eine erste Leitungsader (122) und eine zweite Leitungsader (124) aufweist,
- wobei die Versorgungseinheit (110) über ein erstes, eingangsseitiges Knotenpaar (132, 134) und einen Leitungszweig (140) mit der zweiadrigen Durchgangsleitung (120) verbunden ist, und
- wobei die Daten- und Elektronische Baueinheit (190) über ein Knotenpaar (136, 138) in dem zur Versorgungseinheit (110) führenden Leitungszweig (140) und über eine ausgangsseitige Leitung (150) und ein zweites, ausgangsseitiges Knotenpaar (132, 134) parallel zur Durchgangsleitung (120) angeordnet ist,
dadurch gekennzeichnet, dass
- in dem Leitungszweig (140) zwischen dem Knotenpaar (136, 138) und der Versorgungseinheit (110) mindestens eine erste Gegentaktdrossel (160) als Tiefpassfilter angeordnet ist und
- in der Durchgangsleitung (120) zwischen dem ersten, eingangsseitigen Knotenpaar (132, 134) und dem zweiten, ausgangsseitigen Knotenpaar (132, 134) eine zweite Gegentaktdrossel (130) als Tiefpassfilter angeordnet ist.

## Beschreibung

Die vorliegende Erfindung betrifft ein Device, ein Automatisierungssystem und ein Verfahren zum Betrieb des Automatisierungssystems nach den Oberbegriffen der anliegenden Ansprüche.

Im Stand der Technik ist es bekannt, SPE-Devices in Reihe zu schalten und hierzu bei jedem Device der Reihe eingangsseitig das Datensignal vom versorgenden Gleichstrom zu trennen und es ausgangsseitig wieder dem Gleichstrom aufzuprägen. Bei einer solchen Linientopologie in einem SPE-Netzwerk mit *Power over Dataline* (PoDL) muss die elektrische Versorgung ebenfalls weitergeleitet werden, unabhängig von der vorgenannten Entkopplung der Daten bzw. des Datensignals.

Eine solche Anordnung zeigt beispielsweise die EP 3 236 615 B1, bei der in einem Ringschluss alle Elemente in Reihe geschaltet sind. Hierbei wird das hochfrequente Datensignal über eine Kondensatoren aufweisende Kopplungseinheit weitergeleitet. Der Signalanteil wird zur Durchleitung in einer Bypassversorgungsleitung von dem Versorgungsstrom über zwei Hochpassfilter abgetrennt, die eingangs- und ausgangsseitig im SPE Device angeordnet sind.

Diese Anordnung ist nachteilig, weil hierdurch die Signalfilterung konstruktiv aufwändig ist.

Es ist die Aufgabe der vorliegenden Erfindung, ein verbessertes SPE-Device vorzuschlagen sowie ein vereinfachtes Verfahren.

Diese Aufgabe wird erfindungsgemäß gelöst durch ein Device, ein Automatisierungssystem sowie ein Verfahren gemäß den unabhängigen Ansprüchen. Vorteilhafte Ausgestaltungen sind in den jeweils zugehörigen Unteransprüchen angegeben.

Danach wird die Aufgabe gelöst durch ein Device zum Betrieb in einem SPE-Netzwerk, welches einen Sensor, einen Aktor, eine Sende- und/oder Empfangseinheit oder ein sonstiges elektronisches Gerät umfassen kann. Das Netzwerk ist ein Zweidrahtnetzwerk, welches insbesondere als SPE-Netzwerk mit *Power over Dataline* (PoDL) ausgebildet ist. Dabei umfasst das Device und mindestens ein erstes, eingangsseitiges Interface und mindestens ein zweites, ausgangsseitiges Interface. Das Device umfasst ferner eine Versorgungseinheit, eine Funktionseinheit und eine elektronische Baueinheit. Die elektronische Baueinheit umfasst hierbei das Folgende: eine Prozessoreinheit, ein eingangsseitiges PHY, ausgebildet als ein SPE-Physical Layer (PHY), ein ausgangsseitiges PHY, ausgebildet als ein SPE-Physical Layer (PHY), eine eingangsseitige Kopplungseinheit und eine ausgangsseitige Kopplungseinheit. Hierbei ist das ersten Interface mit dem zweiten Interface über eine zweiadrige Durchgangsleitung verbunden, welche eine erste Leitungsader und eine zweite Leitungsader aufweist. Die Versorgungseinheit ist über ein erstes, eingangsseitiges Knotenpaar und einen Leitungszweig mit der zweiadrigen Durchgangsleitung verbunden. Die elektronische Baueinheit ist parallel zur Durchgangsleitung angeordnet und hierzu eingangsseitig über ein Knotenpaar in dem zur Versorgungseinheit führenden Leitungszweig und ausgangsseitig über eine dortige Leitung und ein zweites, ausgangsseitiges Knotenpaar der Durchgangsleitung verbunden.

Weiterhin ist in dem Leitungszweig zwischen dem dortigen Knotenpaar und der Versorgungseinheit mindestens eine erste Gegentaktdrossel angeordnet, wobei die Gegentaktdrossel als Tiefpassfilter ausgebildet ist. In der Durchgangsleitung ist zwischen dem ersten, eingangsseitigen Knotenpaar und dem zweiten, ausgangsseitigen Knotenpaar eine zweite Gegentaktdrossel als Tiefpassfilter angeordnet.

Auf diese Weise wird der Aufwand und die Baugröße für die Durchleitung des DC-Versorgungsanteils stark reduziert. Insbesondere besteht ein Vorteil darin, dass in der Durchgangsleitung, dem Energiepfad, kein Gleichrichter erforderlich ist. Auf diese Weise kann insbesondere ein Gesamtwiderstand eines Device um bis zu 25% gesenkt werden, verglichen mit einem vergleichbaren PD, bei dem zwei Gegentaktdrosseln in der Durchgangsleitung angeordnet sind, so dass der gesamte Spannungsabfall minimiert wurde.

Die Gegentaktdrosseln kann in unterschiedlichen Bauformen ausgebildet sein und wird auch Differential Mode Choke (DMC) oder Durchgangsdrossel genannt. Sie dient, wie vorstehend ausgeführt, als Tiefpassfilter zur Filterung (Unterdrückung) des hochfrequenten (Daten-)Signals, so dass nur das reine Gleichstromsignal oder der reine Gleichstromanteil in der jeweiligen Leitung bzw. den beiden Leitungsadern verbleibt.

Das Device kann ein eigenes Gehäuse aufweisen, in dem die genannten Bauteile umschlossen sind. Vorliegend soll unter einem "Device" das erfindungsgemäße Bauteil verstanden werden, das die genannte Durchgangsleitung und Anordnung der Gegentaktdrossel aufweist. In Abgrenzung hierzu soll unter einem Powered Device (PD) ein Sensor oder Aktor verstanden werden, der ebendiese Anordnung nicht aufweist.

Die Funktionseinheit wird durch das Device in seiner Grundfunktion bestimmt und umgekehrt. Die Funktionseinheit ist breit zu versehen und kann ein Aktorkopf, ein Sensorkopf, eine LED, eine LED-Gruppe, ein sonstiger Emitter und/oder Empfänger sein, wobei eine Verwendbarkeit im Zusammenhang mit einem SPE erforderlich ist, wozu auch die Ertüchtigung innerhalb des Device verstanden wird, durch geeigneten Bauteile, insbesondere elektronische oder mikroelektronische Bauteile.

In einem Point-to-Point-Netzwerk, wie einem SPE-Netzwerk, fließen Strom und Daten in beide Richtungen bzw. sie werden in beide Richtungen gesendet. Vorliegend sollen zur sprachlichen Vereinfachung diejenige Seite des Device als "Eingangsseite" und das zugehörige Interface als "IN"-Interface gelten, welche/s mit dem übergeordneten zentralen Netzwerk verbunden ist bzw. hierfür vorgesehen ist. In analoger Weise sollen diejenige Seite des Device als "Ausgangsseite" und das zugehörige Interface als "OUT"-Interface gelten, welche/s dem übergeordneten zentralen Netzwerk abgewandt ist. Für untereinander in Reihe verbundene Devices oder verbundene Powered Devices (PD) gilt das vorstehend Ausgeführte in analoger Weise.

In diesem Sinne ergibt sich in analoger Weise eine "UP-Richtung", eine "DN-Richtung", indem die Hauptrichtung der Signalweiterleitung in UP-Richtung von der Eingangsseite zur Ausgangsseite führt, während in DN-Richtung die Hauptrichtung der Signalweiterleitung von einemausgangsseitigen Interface zu einem eingangsseitigen Interface führt. In analoger Weise ist ein eingangsseitiges Knotenpaar näher am ersten, eingangsseitigen Interface als am zweiten, ausgangsseitigen Interface des Device etc.

Ohne die Absicht einer Einschränkung oder Limitierung dient diese Art der Bezeichnung der sprachlichen Verdeutlichung, es sei denn, es ist ausdrücklich etwas Unterschiedliches oder Limitierendes ausgedrückt.

Weiterhin werden vorliegend mit "Knotenpaar" und ggf. der Dopplung von Bezugszeichen synonym ein Paar aus den zwei zugehörigen (Einzel-)Knoten mit denselben Bezugszeichen benannt, auf den zugehörigen beiden Adern derselben Leitung und umgekehrt.

Die benannte "elektronische Baugruppe" ist nicht konstruktiv einschränkend zu verstehen. Sie kann sowohl eine auf einer gemeinsamen Leiterplatte angeordnete Gruppe der genannten elektronischen Bauteile umfassen, ggf. mit weiteren Bauteilen, wie auch der Funktionseinheit oder Teilen der Funktionseinheit. Die "elektronische Baugruppe" soll auch gemeint sein, wenn die genannten Bauteilte und ggf. weitere in sonstiger Weise angeordnet, gruppiert und/oder in oder am Device befestigt sind.

Das Device selbst ist eine SPE-Device und zur Einbindung in ein SPE-Netzwerk mit PoDL und/oder eine entsprechende Zweidrahtleitung ausgebildet.

Die Versorgungseinheit ist insbesondere dazu ausgebildet, die benötigte Leistung für die Funktionseinheit und/oder die Prozessoreinheit bereitzustellen. Im Regelfall wird vorteilhafterweise jeglicher Leistungs- und/oder Strombedarf des Device über die Versorgungseinheit zur Verfügung gestellt. Die Prozessoreinheit umfasst mindestens einen Mikroprozessor (µC). Sie kann weitere µC, Datenspeicher und/oder Schalter (Switches) umfassen.

Eine verbesserte Ausführungsform kann darin bestehen, dass das Verhältnis der Nennströme der erste Gegentaktdrossel in dem Leitungszweig zur Nennspannung der zweiten Gegentaktdrossel in der Durchgangsleitung kleiner oder gleich 0,5 beträgt, vorteilhafterweise kleiner oder gleich 0,25 ist. Idealerweise beträgt der Nennstrom der ersten Gegentaktdrossel in dem Leitungszweig gleich oder weniger als 10% des Nennstroms der Gegentaktdrossel in der vom eingangsseitigen Interface zum ausgangsseitigen Interface führenden Durchgangsleitung.

Anders ausgedrückt gilt insbesondere, dass die erste Gegentaktdrossel nicht baugleich zur zweiten Gegentaktdrossel dimensioniert ausgebildet ist, vielmehr die erste Gegentaktdrossel zumindest vom Bauvolumen kleiner als die zweite Gegentaktdrossel ist. Dadurch muss vorteilhafterweise nur eine Drossel für den Gesamtstrom ausgelegt werden, während die andere Drossel nur für den individuellen Strom der ersten Anschaltung auszulegen ist.

Eine weitere, verbesserte Ausführungsform kann darin bestehen, dass in der Durchgangsleitung mindestens eine Schalteinheit angeordnet ist, um mindestens eine der beiden Leitungsadern zu schalten.

Die Schaltung der Schalteinheit erfolgt vorteilhafterweise durch die Prozessoreinheit oder einen µC der Prozessoreinheit. Die Ansteuerung erfolgt insbesondere über eine verbundene Steuerleitung. Die Schalteinheit selbst ist nicht eingeschränkt, sie kann zum Beispiel als ein Feldeffekttransistor (FET) oder ein sonstiges mikroelektronisches Schaltelement ausgebildet sein, insbesondere ein Opto-FET.

Es kann ein Vorteil darin bestehen, dass die Versorgungseinheit als ein Schaltregler zur Spannungs- und/oder Stromwandlung ausgebildet ist.

Hierbei kann vorgesehen sein, dass die Versorgungseinheit einen periodisch arbeitenden elektronischen Schalter und mindestens einen Energiespeicher umfasst. Vorteilhafterweise kann die Versorgungseinheit allgemein als Gleichspannungswandler (DC/DC), als potentialtrennende oder nicht trennende Baueinheit ausgebildet sein. Da auf der Durchgangsleitung eine größer Spannung anliegt, als für das Device benötigt, ist es vorteilhaft, wenn die Versorgungseinheit als Abwärtswandler oder Tiefsetzsteller ausgebildet ist, die für das Device eine niedrigere Gleichspannung bereitstellt, als von dem Leitungsabzweig am Eingang ansteht.

Von der Erfindung ist weiterhin ein Automatisierungssystem umfasst, das als Single Pair Ethernet (SPE) mit Power over Dataline (PoDL) ausgebildet ist, welches mindestens ein Powering Source Equipment (PSE) und mehrere Powered Devices (PD) umfasst, wobei mindestens ein PSE und mindestens ein PD über das SPE-Netzwerk miteinander verbunden sind, wobei mindestens ein PD ein Device ist oder als eine solches ausgebildet ist, das nach einem der Varianten oder Ausführungsformen ausgebildet ist, wie vorstehend beschrieben, wobei dieses Device mit mindestens einem weiteren Device und/oder mindestens einem PD in Reihe geschaltet ist.

Vorliegend werden für das Device und/oder die Reihe eines SPE-Netzes oder SPE-Netzabschnitts eine Eingangsseite, eine Ausgangsseite, eine UP-Richtung und/oder eine DN-Richtung genannt. Ohne Absicht einer Einschränkung oder Limitierung dient diese Bezeichnung der sprachlichen Verdeutlichung, da bekanntermaßen in einem SPE-Netzwerk in beide Richtungen übermittelt wird.

Vorteilhafterweise ist das Automatisierungssystem mit einem oder mehreren der nachstehenden, übergeordneten und insbesondere zentralen Netze oder Systeme verbunden: einem Entetrprise Resource Planning (ERP), einem Manufacturing Execution System (MES), Supervisiory Control and Data Acquision (SCADA) und/oder Speicherprogrammierbaren Steuerung (SPS).

Insbesondere ist mindestens ein PSE mit einem der vorgenannten Systeme verbunden, wobei das PSE in Reihe mit mindestens einem Device und mindestens einem PD, mehreren Devices und mindestens einem PD verbunden ist/sind.

Ebenfalls ist von der Erfindung ein Verfahren zum Betrieb eines Automatisierungssystems mit PoDL umfasst, wobei das Automatisierungssystem mit PoDL nach einer der vorgenannten Ausführungsformen und Varianten ausgebildet ist.

Hierbei sollen alle Aspekte und Vorteile der Vorrichtung bzw. des Device identisch oder in analoger Weise auch für das Automatisierungssystem und/oder das Verfahren zum Betrieb des Automatisierungssystems gelten und umgekehrt, wenn nicht ausdrücklich etwas Unterschiedliches oder Einschränkendes ausgeführt wird.

Das Automatisierungssystem und das zugehörige Verfahren finden insbesondere Einsatz im Bereich der Prozessautomation von Behandlungs- oder Fertigungsanlagen von (Prozess-)Medien und/oder Werkstücken.

Eine Verbesserung des Verfahrens kann darin bestehen, dass in einem Verfahrensschritt mindestens zeitweise ein oder mehrere Devices mittels der Schalteinheit eines Device abgeschaltet werden. Die Rück- oder Durchleitung von (Daten-)Signalen über die zweite Leitungsader an das PSE bleibt für das schaltende Device dabei möglich.

Das schaltende, aktive Device ist hierbei vorteilhafterweise in der Kette von in Reihe geschalteten Devices das letzte aktive Device, so dass alle Devices zwischen dem letzten, aktiven Device und dem PSE eingeschaltet sind und alle nachfolgenden, ausgangsseitig angeordneten Devices und PD abgeschaltet sind.

Bei einer weiteren Verbesserung des Verfahrens ist dieser Verfahrensschritt, bei dem ein Device mindestens ein nachfolgendes und in Reihe geschaltetes Device oder PD abschaltet, ein Analyse- und/oder Initialisierungsschritt, der beim Start des Netzwerkes oder eines Teils des Netzwerkes vorgenommen wird. Dieser Analyse- und/oder Initialisierungsschritt dient vorteilhafterweise zur Bestimmung und Rückmeldung der Leitungsklasse (Power Class) des jeweiligen Device, welche die Abschaltung der in Stromrichtung nachfolgenden PD und/oder Devices veranlasst.

Vorteilhafterweise ist die Schalteinheit derart ausgebildet und/oder mit einen Energiespeicher verbunden, dass mindestens das Initialisierungsprotokoll und die Daten zur Leistungsklasse in DN-Richtung gesendet werden können, insbesondere an das PSE und/oder ein Gateway-Modul gesendet werden können.

Es sei auch noch darauf hingewiesen, dass im Rahmen der hier vorliegenden Patentanmeldung unbestimmte Artikel und unbestimmte Zahlenangaben wie "ein...", "zwei..." usw. im Regelfall als mindestens-Angaben zu verstehen sein sollen, also als "mindestens ein... ", "mindestens zwei..." usw., sofern sich nicht etwa aus dem Kontext oder dem konkreten Text einer bestimmten Stelle ergibt, dass etwa dort nur "genau ein...", "genau zwei..." usw. gemeint sein soll.

An dieser Stelle sei noch erwähnt, dass im Rahmen der hier vorliegenden Patentanmeldung der Ausdruck "insbesondere" immer so zu verstehen sei, dass mit diesem Ausdruck ein optionales, bevorzugtes Merkmal eingeleitet wird. Der Ausdruck ist nicht als "und zwar" und nicht als "nämlich" zu verstehen.

Weitere Einzelheiten und Vorteile der Erfindung sollen nun anhand eines in den Zeichnungen dargestellten Ausführungsbeispiels näher erläutert werden.

Es zeigen:
- Fig. 1: eine erste Ausführungsform eines Device als schematisches Schaltbild,
- Fig. 2: eine weitere Ausführungsform eines Device und
- Fig. 3: das Device nach Figur 2 mit einem ersten Signalpfad, und
- Fig. 4: eine Gruppe von Device in einer dritten Ausführungsform.

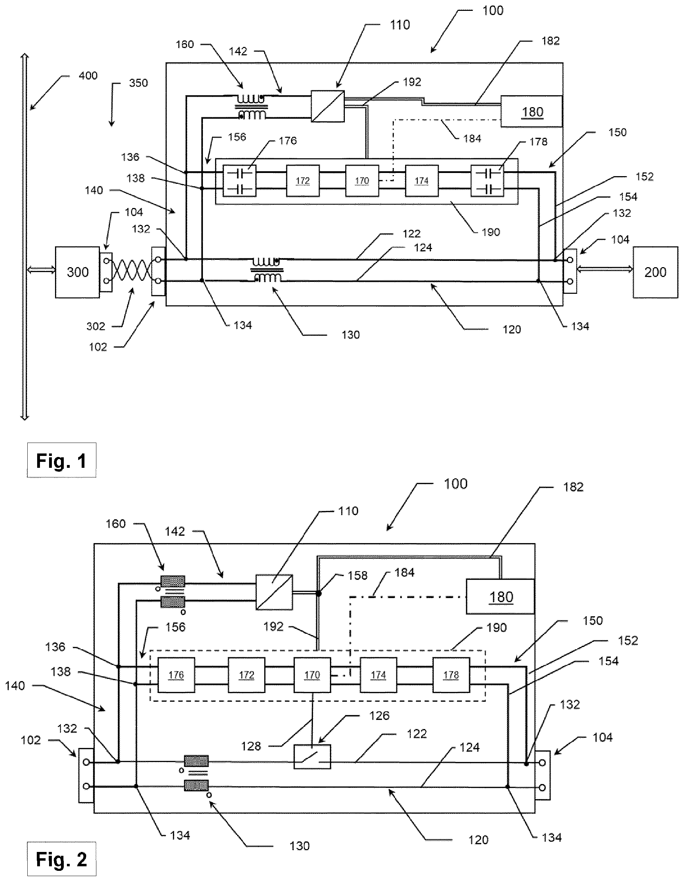

In der Fig. 1 ist ein stark vereinfachtes, übergeordnetes Netzwerk 400 gezeigt, das ein PSE 300 und ein Device 100 als SPE umfasst, welche über eine Zweidrahtleitung 302 miteinander verbunden sind, die das eigentliche SPE-Netzwerk 350 oder den SPE-Netzwerkabschnitt bilden.

Das übergeordnete Netzwerk 400 ist vorliegend ein Datenbus-Netzwerk, wie etwa ein CAN-Bus oder ein Profibus- oder Ethernet Netzwerk, kann bei einer alternativen Ausführungsform aber auch als IO-Link oder ebenfalls als SPE-Netzwerk ausgebildet sein. In dem gezeigten Beispiel bildet die Strecke vom PSE 300 mit den beiden Devices 100, 200 das SPE-Netzwerk. Die beiden Devices 100, 200 sind analog ausgestaltet, wie nachstehend für das Device 100 beschrieben und in Reihe zueinander. Vorliegend ist das Device 100 ein Thermosensor und das Device 200 ein induktiver Näherungssensor.

Das Device 100 umfasst auf der Eingangsseite ein SPE-Interface 102 und auf der Ausgangsseite ein weiteres SPE-Interface 104. Auch wenn in einem Point-to-Point-Netzwerk wie einem SPE-Netzwerk 350 Strom und Daten in beide Richtungen fließen bzw. gesendet werden, soll nachfolgend als Eingangsseite diejenige Seite des Device 100 gelten und das zugehörige Interface als "IN" Interface 102, welche/s mit dem PSE 300 verbunden ist bzw. hierfür vorgesehen ist. In analoger Weise soll die Seite des Device 100 als Ausgangsseite gelten und das zugehörige Interface als "OUT" Interface 104 gelten, welche/s nicht dafür vorgesehen und/oder die Verschaltung des Device 100 nicht ausgebildet ist, um mit dem PSE 300 verbunden zu werden bzw. die strom- und/oder datentechnische Eingangsseite zu bilden. Für untereinander verbundene Devices 100, 200 oder das PD 202 gilt das vorstehende in analoger Weise.

Das Device 100 ist vorliegend als Temperatursensor ausgebildet und weist ein Thermoelement als Funktionseinheit 180 auf. Es weist ein erstes, eingangsseitiges Interface 102 und ein zweites, ausgangsseitiges Interface 104 auf, eine Versorgungseinheit 110, die vorgenannte Funktionseinheit 180 und eine elektronische Baueinheit 190. Diese elektronische Baueinheit 190 ist in dem gezeigten Ausführungsbeispiel eine Leiterplatte, die das Folgende umfasst:
eine Prozessoreinheit 170 mit mindestens einer CPU und bedarfsweise einer oder mehreren Switch-Einheiten, ein eingangsseitiges SPE PHY 172, ein ausgangsseitiges SPE PHY 174 sowie zum Empfang und zur Übertragung des hochfrequenten (digitalen) Signals eine eingangsseitige Kopplungseinheit 176 und eine ausgangsseitige Kopplungseinheit 178.

Die Bauteile der elektronische Baueinheit 190 sind vorteilhafterweise auf einer gemeinsamen Leiterplatte angeordnet, wobei in einem nicht gezeigten Ausführungsbeispiel auch die Funktionseinheit 180 auf der einen, gemeinsamen Leiterplatte angeordnet sein könnte und/oder die erste Gegentaktdrossel 160 ebenfalls auf der Leiterplatte angeordnet sein kann.

Die Versorgungseinheit 110 ist eine Gleichstromspannungsquelle, die als Schaltregler ausgebildet ist und für alle Bauteile des Device 100 als Spannungsquelle dient, insbesondere für die Funktionseinheit 180 über die Versorgungsleitung 182 und für die als Leiterplatte ausgebildete elektronische Baueinheit 190 über die Versorgungsleitung 192. Die Kommunikation der Funktionseinheit 180 zur Steuerung und Übermittlung von Messwerten mit der Prozessoreinheit 170 erfolgt über die strichpunktiert dargestellte Datenleitung 184. Vorliegend ist eine Funktionseinheit 180 dargestellt, die mit der einen Prozessoreinheit 170 kommuniziert und von dieser gesteuert wird. Bei einer nicht dargestellten Ausführungsvariante sind zwei oder mehr Funktionseinheiten 180 vorgesehen, wie beispielsweise ein Thermoelement und eine Gruppe von LED, wobei eine der beiden Funktionseinheiten 180 einen eigenen µC aufweisen kann, der wiederum mit der Prozessoreinheit 170 kommuniziert.

Die beiden Interfaces 102, 104 sind mit den jeweiligen gleichartigen Ports über eine zweiadrige Durchgangsleitung 120 verbunden, insbesondere über die Drossel 130.

Weiterhin ist die Versorgungseinheit 110 über ein erstes (eingangsseitiges) Knotenpaar 132, 134 und einen Leitungszweig 140 mit der Durchgangsleitung 120 verbunden.

Die, insbesondere als Leiterplatte ausgebildete, elektronische Baueinheit 190 ist parallel zur Durchgangsleitung 120 in die Verschaltung des Device 100 eingebunden. Hierzu ist die eingangsseitige Kopplungseinheit 176 der elektronischen Baueinheit 190 über einen zweiadrigen Leitungsabschnitt 156 und das Knotenpaar 136, 138 mit dem zur Versorgungseinheit 110 führenden Leitungszweig 140 verbunden. Weiterhin ist die ausgangsseitige Kopplungseinheit 178 der elektronischen Baueinheit 190 über die zweiadrige Leitung 150 mit dem ausgangsseitigen Knotenpaar 132, 134 der Durchgangsleitung 120 verbunden. Die Leitung 150 weist Leitungsadern 152, 154 auf, die über die vorgenannten, ausgangsseitigen Knoten 132, 134 mit den zugehörigen Leitungsadern 122, 124 der Durchgangsleitung 120 verbunden sind.

Das Device 100 weist nun zwei Gegentaktdrosseln 130, 160 auf, auch Differential Mode Choke (DMC) oder Durchgangsdrossel, genannt, die zur Filterung des hochfrequenten Signals dienen und somit das jeweils reine Gleichstromsignal durchlassen.

Die erste Gegentaktdrossel 160 ist in dem Leitungszweig 140 angeordnet, zwischen einerseits dem zum Leitungsabschnitt 156 und der eingangsseitigen Kopplungseinheit 176 führenden Knotenpaar 136, 138 und andererseits der Versorgungseinheit 110, so dass an der Versorgungseinheit 110 nur das reine Gleichstromsignal ohne differenziellen Anteil ankommt. Die Versorgungseinheit 110 ist mit der ersten Gegentaktdrossel 160 über den Leitungsabschnitt 142 elektrisch verbunden.

Eine zweite Gegentaktdrossel 130 dient ebenfalls als Tiefpassfilter und ist in der Verbindungsleitung 120 zwischen dem eingangsseitigen Knotenpaar 132, 134 und dem ausgangsseitigen Knotenpaar 132, 134 angeordnet. Somit kommt an dem ausgangsseitigen Knoten 132 über die erste Leitungsader 122 der Verbindungsleitung 120 ein reines Gleichstromsignal an und der digitale Signalanteil wird an dem Knoten 132 aufgeprägt. In analoger Weise kommt an dem eingangsseitigen Knoten 134 über die zweite Leitungsader 124 ein reines Gleichstromsignal an, auf welches an diesem Knoten 134 der digitale Signalanteil, kommend von der eingangsseitigen Kopplungseinheit 176, aufgeprägt und an das PSE 300 weitergeleitet wird.

Wie in dem gezeigten Ausführungsbeispiel der Fig. 1 gut zu erkennen, fließt über die erste Gegentaktdrossel 160 nur der unmittelbar für das Device 100 benötigte Strom, so dass im vorliegenden Fall eines Thermoelements die erste Gegentaktdrossel 160 lediglich für eine Nennleistung von 1 Watt ausgebildet ist.

Über die zweite Gegentaktdrossel 130 fließt der gesamte Strom des SPE-Netzwerkes, so dass diese entsprechend größer dimensioniert sein muss und vorliegend für eine Nennleitung von 12 Watt ausgelegt ist. In erster Näherung korreliert die Baugröße bei Typengleichheit der Nennleistung, so dass das Bauvolumen der ersten Gegentaktdrossel 160 nur 1/12 der Baugröße der zweiten Gegentaktdrossel 130 beträgt.

Bei der Ausführungsform nach Fig. 2, die weitgehend mit dem der Fig. 1 übereinstimmt, sind die Funktionseinheit 180 und die Prozessoreinheit 170 über einen Leitungsknoten und einen gemeinsamen Leitungsabschnitt mit der Versorgungseinheit 110 verbunden. Der wesentliche Unterschied zur Ausführungsform der Fig. 1 besteht darin, dass in der Durchgangsleitung 120 ein Schaltelement 126 vorgesehen ist. Das Schaltelement 126 ist über eine Steuerleitung 128 mit der Prozessoreinheit 170 verbunden, worüber das Schaltelement 126 schaltbar ist. Das Schaltelement 126 kann insbesondere als FET ausgebildet sein und dient zur Unterbrechung der ersten Leitungsader 122 der Durchgangsleitung 120, in die es eingebunden ist, so dass nachfolgenden und in Reihe geschalteten Devices deaktiviert werden können. In dem in der Fig. 2 gezeigten Ausführungsbeispiel ist die elektronische Baueinheit 190 nur eine Gruppierung der elektronischen Bauteile und Elemente, die aber nicht auf einer gemeinsamen Leiterplatte angeordnet sind, sondern auf einer sonstigen Weise innerhalb des Device 100 gelagert und miteinander leitend verbunden sind.

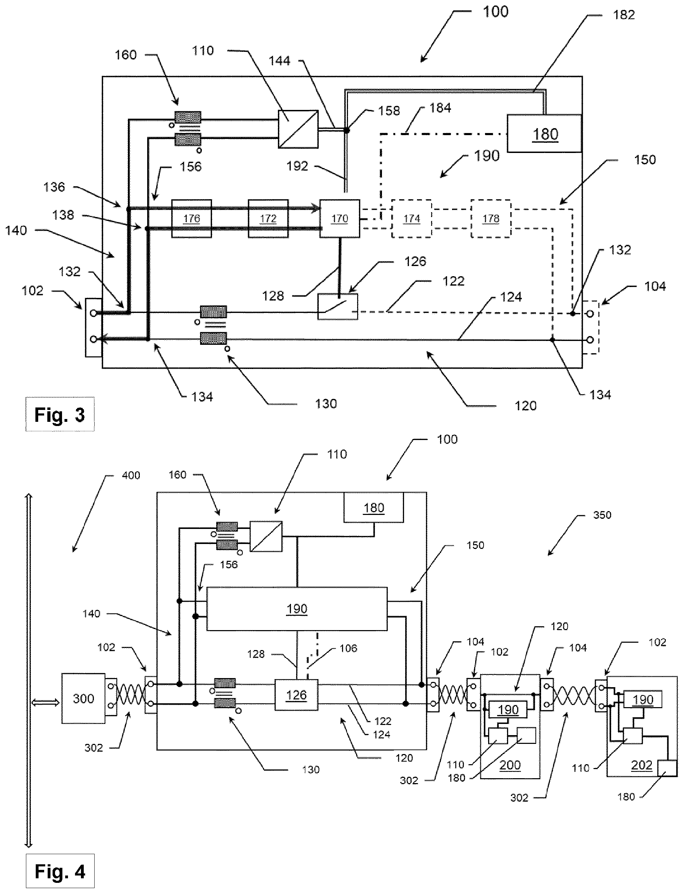

Die Fig. 3 zeigt die Ausführungsform des Device 100 in diesem Schaltzustand, bei dem durch das Schaltelement 126 die erste Leitungsader 122 der Durchgangsleitung 120 unterbrochen ist. Dieser Schaltzustand ist insbesondere bei einem Selbstdiagnose- und/oder Initialisierungsschritt des Device 100 als solches vorteilhaft, weil störende Einflussgrößen oder unbekannte Effekte von weiteren Geräten, Modulen und Baueinheiten, wie auch weiteren Devices 100, 200 oder PD 202 weitgehend ausgeschlossen werden.

Die deaktivierten Elemente sind gestrichelt dargestellt. Breitere Linien und Pfeile zeigen einen Signal- oder Datenfluss, der über das eingangsseitige Interface 102, den Knoten 132, den Leitungszweig 140 und den Knoten 136 zum eingangsseitigen Kopplungselement 176 führt, wobei das hochfrequente Signal an das eingangsseitige SPE PHY 172 übergeben und nachfolgend an die Prozessoreinheit 170 übertragen wird.

Die Prozessoreinheit 170 verwertet dieses Eingangssignal (Eingangsprotokoll) und erstellt mit ergänzenden Analysedaten ein Ausgangssignal (Ausgangsprotokoll) und leitete dieses in umgekehrter Richtung weiter, wie dargestellt. Das heißt, die Weiterleitung erfolgt in diesem Fall über das SPE PHY 172, die Kopplungseinheit 176, den Knoten 138 in dem Leitungszweig 140 und den Knoten 134 in der zweiten Leitungsader 124 der Versorgungsleitung 120 und zum eingangsseitigen Interface 102

Bei dem Ausführungsbeispiel der Fig. 4 besteht das SPE-Netzwerk aus einem PSE 300, einem Device 100 mit einer Durchgangsleitung 120, einem zweiten Device 200, das identisch zu dem Device der Fig. 1 ausgebildet ist und einem PD 202 nach dem Stand der Technik ohne eine analoge Durchgangsleitung 120. Das PSE 300, die Devices 100, 200 und das PD 202 sind zueinander in Reihe geschaltet und über Zweidrahtleitungen 302 verbunden. Das PSE 300 ist mit einem zentralen, übergeordneten Kommunikationsnetz 400 verbunden, das vorliegend ein IO-Link oder ein Ethernet ist.

Das Device 100 weist eine zum Ausführungsbeispiel der Figuren 2-4 unterschiedliche Schalteinheit 126 auf, die in nicht näher gezeigter Art und Weise ausgebildet ist, um beide Leitungsadern 122, 124 der Durchgangsleitung 120 bedarfsweise zu schalten, wozu diese über die Steuerleitung 128 und/oder eine Datenleitung 106 mit der nicht dargestellten Prozessoreinheit 170 der elektronischen Baueinheit 190 verbunden und hierüber steuerbar ist.

### Bezugszeichenliste

- 100: Device
- 102: Interface SPE ("IN")
- 104: Interface SPE ("OUT")
- 106: Datenleitung

- 110: Versorgungseinheit (Power Supply)

- 120: Durchgangsleitung
- 122: Erste Leitungsader
- 124: Zweite Leitungsader
- 126: Schalteinheit
- 128: Steuerleitung

- 130: Gegentaktdrossel
- 132: Knoten (in der ersten Leitungsader 122)
- 134: Knoten (in der zweiten Leitungsader 124)
- 136: Knoten
- 138: Knoten

- 140: Leitungszweig
- 142: Leitungsabschnitt
- 144: Versorgungsleitung, zentral

- 150: Leitung (ausgangsseitig 190)
- 152: Leitungsader
- 154: Leitungsader
- 156: Leitungsabschnitt (eingangsseitig 190)
- 158: Knoten (in 144, 192)

- 160: Gegentaktdrossel)

- 170: Prozessoreinheit (CPU und Switch)
- 172: PHY (links)
- 174: PHY (rechts)
- 176: Kopplungseinheit
- 178: Kopplungseinheit
- 180: Funktionseinheit
- 182: Versorgungsleitung (von 180)
- 184: Datenleitung

- 190: Baueinheit, elektronische
- 192: Versorgungsleitung
- 194: Schaltelement

- 200: Device
- 202: Powered Device

- 300: Power Source Equipment (PSE)
- 302: Zweidrahtleitung (SPE)
- 350: SPE-Netzwerk, SPE-Netzwerkabschnitt

- 400: Netzwerk, zentrales

## Patentansprüche

1. Device (100) zum Betrieb in einem Netzwerk (400), wobei das Device (100) einen Sensor, einen Aktor, eine Sende- und/oder Empfangseinheit oder ein sonstiges elektronisches Gerät umfasst, wobei das Netzwerk als ein Zweidrahtnetzwerk mit *Power over Dataline,* PoDL, ausgebildet ist, umfassend mindestens ein erstes, eingangsseitiges Interface (102), mindestens ein zweites, ausgangsseitiges Interface (104), eine Versorgungseinheit (110), eine Funktionseinheit (180) und eine Daten- und Elektronische Baueinheit (190), wobei die Daten- und Elektronische Baueinheit (190) das Folgende umfasst:
eine Prozessoreinheit (170), ein eingangsseitiges PHY (172), ein ausgangsseitiges PHY (174), eine eingangsseitige Kopplungseinheit (176) und
eine ausgangsseitige Kopplungseinheit (178),
- wobei das ersten Interface (102) mit dem zweiten Interface (104) über eine zweiadrige Durchgangsleitung (120) verbunden ist, welche eine erste Leitungsader (122) und eine zweite Leitungsader (124) aufweist,
- wobei die Versorgungseinheit (110) über ein erstes, eingangsseitiges Knotenpaar (132, 134) und einen Leitungszweig (140) mit der zweiadrigen Durchgangsleitung (120) verbunden ist, und
- wobei die Daten- und Elektronische Baueinheit (190) über ein Knotenpaar (136, 138) in dem zur Versorgungseinheit (110) führenden Leitungszweig (140) und über eine ausgangsseitige Leitung (150) und ein zweites, ausgangsseitiges Knotenpaar (132, 134) parallel zur Durchgangsleitung (120) angeordnet ist, **dadurch gekennzeichnet, dass**
- in dem Leitungszweig (140) zwischen dem Knotenpaar (136, 138) und der Versorgungseinheit (110) mindestens eine erste Gegentaktdrossel (160) als Tiefpassfilter angeordnet ist und
- in der Durchgangsleitung (120) zwischen dem ersten, eingangsseitigen Knotenpaar (132, 134) und dem zweiten, ausgangsseitigen Knotenpaar (132, 134) eine zweite Gegentaktdrossel (130) als Tiefpassfilter angeordnet ist.

2. Vorrichtung nach Anspruch 1, **dadurch gekennzeichnet, dass** das Verhältnis der Nennspannungen der erste Gegentaktdrossel (160) in dem Leitungszweig (140) zur Nennspannung der zweiten Gegentaktdrossel (130) in der Durchgangsleitung (120) kleiner oder gleich 0,5 beträgt.

3. Vorrichtung nach Anspruch 1 oder 2, **dadurch gekennzeichnet, dass** in der zweiadrigen Durchgangsleitung (120) mindestens eine Schalteinheit (126) angeordnet ist, um mindestens eine der beiden Leitungsadern (122, 124) zu schalten.

4. Vorrichtung nach einem der vorherigen Ansprüche, **dadurch gekennzeichnet, dass** die Versorgungseinheit (110) ein Schaltregler ist, insbesondere zur Spannungs- und/oder Stromwandlung.

5. Automatisierungssystem als SPE-Netzwerk (350) mit PoDL, umfassend mindestens ein *Powering Source Equipment* (300), PSE, und mehrere Powered Devices (100, 200, 202), PD, wobei mindestens ein PSE (300) und mindestens ein Powered Device (100, 200, 202) über das SPE-Netzwerk miteinander verbunden sind, **dadurch gekennzeichnet, dass**
mindestens ein PD (202) als ein Device (100) nach einem der Ansprüche 1 bis 4 ausgebildet ist, wobei dieses Device (100) mit mindestens einem weiteren Device (100, 200) und/oder mindestens einem Powered Device (202) in Reihe verbunden ist.

6. Verfahren zum Betreiben eines Automatisierungssystems, das als SPE-Netzwerk (350) mit PoDL ausgebildet ist, **dadurch gekennzeichnet, dass** das Automatisierungssystem nach Anspruch 5 ausgebildet ist.

7. Verfahren nach Anspruch 6, **dadurch gekennzeichnet, dass** in einem Verfahrensschritt mindestens zeitweise mindestens ein Device (200, 202) mittels der Schalteinheit (126) eines Device (100, 200) von der Versorgung über das Netzwerk (350) getrennt wird.

8. Verfahren nach Anspruch 7, **dadurch gekennzeichnet, dass** dieser Verfahrensschritt ein Initialisierungsschritt beim Start des Netzwerkes (400) oder eines Teils des Netzwerkes (350) ist.

## Geänderte Patentansprüche

### Geänderte Patentansprüche gemäss Regel 137(2) EPÜ.

1. Device (100) zum Betrieb in einem Netzwerk (400), wobei das Device (100) einen Sensor, einen Aktor, eine Sende- und/oder Empfangseinheit oder ein sonstiges elektronisches Gerät umfasst, wobei das Netzwerk als ein Zweidrahtnetzwerk mit *Power over Dataline,* PoDL, ausgebildet ist, umfassend mindestens ein erstes, eingangsseitiges Interface (102), mindestens ein zweites, ausgangsseitiges Interface (104), eine Versorgungseinheit (110), eine Funktionseinheit (180) und eine Daten- und Elektronische Baueinheit (190), wobei die Daten- und Elektronische Baueinheit (190) das Folgende umfasst:
eine Prozessoreinheit (170), ein eingangsseitiges PHY (172), ein ausgangsseitiges PHY (174), eine eingangsseitige Kopplungseinheit (176) und
eine ausgangsseitige Kopplungseinheit (178),
- wobei das ersten Interface (102) mit dem zweiten Interface (104) über eine zweiadrige Durchgangsleitung (120) verbunden ist, welche eine erste Leitungsader (122) und eine zweite Leitungsader (124) aufweist,
- wobei die Versorgungseinheit (110) über ein erstes, eingangsseitiges Knotenpaar (132, 134) und einen Leitungszweig (140) mit der zweiadrigen Durchgangsleitung (120) verbunden ist, und
- wobei die Daten- und Elektronische Baueinheit (190) über ein Knotenpaar (136, 138) in dem zur Versorgungseinheit (110) führenden Leitungszweig (140) und über eine ausgangsseitige Leitung (150) und ein zweites, ausgangsseitiges Knotenpaar (132, 134) parallel zur Durchgangsleitung (120) angeordnet ist, **dadurch gekennzeichnet, dass**
- in dem Leitungszweig (140) zwischen dem Knotenpaar (136, 138) und der Versorgungseinheit (110) mindestens eine erste Gegentaktdrossel (160) als Tiefpassfilter angeordnet ist und
- in der Durchgangsleitung (120) zwischen dem ersten, eingangsseitigen Knotenpaar (132, 134) und dem zweiten, ausgangsseitigen Knotenpaar (132, 134) eine zweite Gegentaktdrossel (130) als Tiefpassfilter angeordnet ist.

2. Vorrichtung nach Anspruch 1, **dadurch gekennzeichnet, dass** das Verhältnis des Nennstromes der ersten Gegentaktdrossel (160) in dem Leitungszweig (140) zum Nennstrom der zweiten Gegentaktdrossel (130) in der Durchgangsleitung (120) kleiner oder gleich 0,5 beträgt.

3. Vorrichtung nach Anspruch 1 oder 2, **dadurch gekennzeichnet, dass** in der zweiadrigen Durchgangsleitung (120) mindestens eine Schalteinheit (126) angeordnet ist, um mindestens eine der beiden Leitungsadern (122, 124) zu schalten.

4. Vorrichtung nach einem der vorherigen Ansprüche, **dadurch gekennzeichnet, dass** die Versorgungseinheit (110) ein Schaltregler ist, insbesondere zur Spannungs- und/oder Stromwandlung.

5. Automatisierungssystem als SPE-Netzwerk (350) mit PoDL, umfassend mindestens ein *Powering Source Equipment* (300), PSE, und mehrere Powered Devices (100, 200, 202), PD, wobei mindestens ein PSE (300) und mindestens ein Powered Device (100, 200, 202) über das SPE-Netzwerk miteinander verbunden sind, **dadurch gekennzeichnet, dass**
mindestens ein PD (202) als ein Device (100) nach einem der Ansprüche 1 bis 4 ausgebildet ist, wobei dieses Device (100) mit mindestens einem weiteren Device (100, 200) und/oder mindestens einem Powered Device (202) in Reihe verbunden ist.

6. Verfahren zum Betreiben eines Automatisierungssystems, das als SPE-Netzwerk (350) mit PoDL ausgebildet ist, **dadurch gekennzeichnet, dass** das Automatisierungssystem nach Anspruch 5 ausgebildet ist.

7. Verfahren nach Anspruch 6, **dadurch gekennzeichnet, dass** in einem Verfahrensschritt mindestens zeitweise mindestens ein Device (200, 202) mittels der Schalteinheit (126) eines Device (100, 200) von der Versorgung über das Netzwerk (350) getrennt wird.

8. Verfahren nach Anspruch 7, **dadurch gekennzeichnet, dass** dieser Verfahrensschritt ein Initialisierungsschritt beim Start des Netzwerkes (400) oder eines Teils des Netzwerkes (350) ist.
